# DEMANDE DE BREVET EUROPEEN

(11) **EP 2 072 247 A1**
(43) Date de publication de la demande: **24.06.2009**
(21) Numéro de dépôt: 07123349.8
(22) Date de dépôt: 17.12.2007
(51) Int. Cl.: B32B 17/10, C03C 27/12, C09D 1/02, C01B 33/32

(54) **Vitrage anti-feu**

(71) Demandeur: AGC Flat Glass Europe SA, 1170 Bruxelles (Watermael-Boitsfort) (BE)
(72) Inventeur: GOELFF, Pierre, 6040, Jumet (BE)
(74) Mandataire: Le Vaguerèse, Sylvain Jacques

(57) **Abrégé**

La présente invention concerne les vitrages anti-feu transparents. Ils comprennent au moins une couche de matériau intumescent entre des feuilles de verre. La couche intumescente est une couche de poly-silicate alcalin hydraté dans la préparation duquel la silice présente provient pour au moins 20% d'une solution de silicate industrielle, le surplus provenant de suspensions de silice colloïdale, la préparation de la composition comprenant systématiquement le passage du silicate industriel à un silicate dédié par un ajustement de la teneur en eau à une valeur inférieure à 45% et de préférence inférieure 40%, la préparation de la composition comprenant une étape de dégazage/déshydratation après addition d'au moins la majeure partie de la silice colloïdale.

## Description

La présente invention concerne les vitrages anti-feu comprenant au moins une couche d'un silicate alcalin hydraté dont l'exposition au feu engendre la formation d'une mousse opaque qui s'oppose à la transmission des radiations et maintient les feuilles de verre auxquelles la ou les couches de silicate alcalin sont associées.

L'utilisation des silicates alcalins hydratés dans la fabrication des vitrages anti-feu s'effectue selon deux modes distincts.

Le premier mode comprend les produits dans lesquels la, ou les couches de silicates sont formées à partir de solutions commerciales de ces silicates, solutions auxquelles sont ajoutés des additifs divers qui en améliorent les propriétés et/ou les conditions de mise en oeuvre. Partant de ces solutions les couches sont obtenues en répandant la solution sur un support et en procédant à un séchage plus ou moins prolongé jusqu'à obtention d'une couche solide. La couche de silicate ainsi formée, éventuellement directement sur une feuille de verre, est ensuite incluse dans un ensemble feuilleté entre deux feuilles de verre.

Pour cette première famille de produits les conditions de préparation, et particulièrement celles de séchage sont relativement contraignantes.

Le choix de la voie du séchage à partir de silicates alcalins industriels a également des conséquences pour ce qui concerne les qualités mécaniques des vitrages incorporant ces couches de silicates. La faible teneur en eau choisie pour éviter l'altération dans le temps des propriétés de transparence, ne permet pas d'avoir des couches très "plastiques". La conséquence est une limitation de la résistance dite "au choc mou", résistance qui est nécessaire dans certaines applications notamment dans les vitrages extérieurs, et qui doit être compensée par une structure particulière, par exemple par association avec des feuilles stratifiées comportant un intercalaire d'un matériau thermoplastique, ou encore le plus souvent par l'adjonction de composés qui accroissent la plasticité de la couche intumescente. Pour produits plastifiants on utilise le plus souvent des polyols, notamment des glycols. La présence de ces derniers est relativement importante pour les teneurs en eau les plus faibles. Ainsi pour des teneurs en eau de l'ordre de 20 à 25% en poids, il est usuel d'introduire de l'ordre de 15% en poids ou plus d'éthylène glycol ou de glycérine. La présence de quantités telles de produits organiques n'est pas avantageuse pour ce qui concerne le comportement au feu. Ils conduisent à la carbonisation et au dégagement de fumées indésirables.

Le second mode traditionnel concerne les produits dans lesquels une solution de silicate à teneur en eau relativement élevée, est figée par l'addition de produits qualifiés de "durcisseurs", "d'agents de réticulation" ou d'autre façon encore. Ces qualificatifs désignent de façon générique des produits qui favorisent la gélification de la solution de silicate. Ils sont choisis soigneusement, de sorte qu'après leur addition à la solution de silicate, cette dernière laissée au repos durcit spontanément dans un temps relativement bref, sans qu'il soit nécessaire de procéder à un séchage.

Pour ces produits, avant formation du gel, la solution avec ses additifs est coulée entre deux feuilles de verre délimitant un espace clos. Un joint situé à la périphérie des feuilles de verre les associe de façon étanche et maintient la solution pendant sa gélification.

L'absence de séchage constitue un avantage certain pour ce qui concerne le mode de production. Les produits en question conservent bien évidemment une teneur en eau relativement élevée. Cette teneur est choisie de telle sorte que la solution de silicate ne puisse pas donner lieu à une gélification prématurée rendant impossible sa mise en oeuvre ultérieure. La stabilité dans le temps de ces solutions est en effet fonction de cette teneur en eau.

De façon typique les compositions antérieures mises en oeuvre sans séchage, ont une teneur en eau de l'ordre de 47-48% en poids. Les publications à ce sujet, ne proposent pas de composition présentant une teneur en eau inférieure à 44%, pour la raison qu'une teneur en eau moindre conduisait à une composition dont la fluidité ne pouvait être garantie un temps suffisant ("pot life").

Il convient de préciser que par teneur en eau on désigne celle qui peut être déterminée par évaporation complète. Cette teneur ne tient pas compte de l'état de cette eau dans ces compositions de silicates "hydratés".

La présence de cette eau relativement abondante peut conduire à un manque de cohésion du vitrage. Soumis à des efforts de cisaillement dans le plan du vitrage, les feuilles de verre, même à température ordinaire sont susceptibles de jouer les unes par rapport aux autres.

La teneur en eau élevée peut aussi produire une "mousse" très irrégulière, nuisible à l'intégrité de la feuille soumise à l'épreuve du feu. Pour que ces produits présentent les qualités "mécaniques" requises à l'épreuve au feu, il est fait usage de moyens qui compensent les propriétés insuffisantes de la couche intumescente. Par exemple à la place de feuilles de verre recuit, il est fait usage de verre trempé. Cette solution accroît le coût des produits mais surtout nécessite la production aux dimensions finales requises, le découpage après trempe n'étant pas possible.

Par ailleurs de fortes proportions d'eau dans la couche intumescente nécessitent de renforcer la protection des bords pour éviter une altération dans le temps, consécutive par exemple à un assèchement progressif à partir de ces bords.

Des propositions antérieures de la demanderesse ont conduit à la préparation de compositions de silicates hydratés ne nécessitant pas de séchage ou un séchage très limité, présentant un rapport molaire SiO₂/M₂O (M étant un alcalin, notamment le potassium), relativement élevé, notamment entre 3 et 8 et de préférence entre 3,5 et 6, conduisant à des produits bien réfractaires, avec une teneur en eau qui peut varier sensiblement de 30 à 48% en poids de la couche, et de préférence de 35 à 43% en poids.

La production de ces compositions, telle qu'elle a été envisagée, présente des particularités qui peuvent les rendre économiquement peu attrayantes. Cette production comporte systématiquement l'utilisation, au moins pour une part significative, de suspensions de particules de silice colloïdale. Cette source de silice est très coûteuse en comparaison de la silice provenant de poly-silicates alcalins industriels.

La production des compositions peut être réalisée à partir de solutions concentrées d'hydroxyde alcalin, notamment de potasse, et de suspensions de silice colloïdale. Elle peut aussi passer par des solutions de silicates alcalins industrielles comme source au moins partielle de la silice entrant dans ces compositions. Dans tous les cas néanmoins, compte tenu des caractéristiques propres des solutions de silicates alcalins, il est nécessaire de compléter la teneur en silice par l'addition de suspension de silice colloïdale.

L'utilisation seule de suspension de silice colloïdale et d'hydroxyde alcalin permet de moduler commodément la teneur en eau et le rapport molaire de la composition, même si les suspensions de silice comportent en règle générale une teneur en eau qui n'est pas inférieure à 50% en poids. L'ajustement de cette teneur est obtenu au moyen par exemple de l'utilisation de solutions concentrées d'hydroxyde alcalin, ou même par l'adjonction de pastilles d'hydroxyde.

Les couches intumescentes préparées à partir de silice colloïdale et d'hydroxyde présentent des propriétés bien maîtrisées et constantes. Néanmoins, pour des raisons d'économie, il est préféré d'utiliser au moins partiellement des solutions commerciales de silicates. L'apport de silice par ces solutions est au moins trois fois moins coûteux que l'apport par la silice colloïdale. Il est donc souhaitable d'utiliser autant que possible ces solutions de silicates.

Dans tous les cas, les solutions commerciales de silicates alcalins ne peuvent être utilisées telles quelles. Leur teneur en eau est relativement élevée, et cette teneur est d'autant plus importante que le rapport molaire SiO₂/M₂O est lui-même plus important.

A titre indicatif la teneur en eau des solutions commerciales de silicates de potassium est de l'ordre de 65% en poids pour un rapport molaire de 3,3, et de l'ordre de 45% pour un rapport molaire de 2. Ces solutions commerciales sont ajustées pour maintenir une viscosité adéquate pour leurs utilisateurs. Aux valeurs indiquées ci-dessus, la viscosité se situe à moins de 100mPa.s.

Pour réduire la teneur en eau des solutions de silicates jusqu'à celles correspondant aux produits recherchés, il est souhaitable bien entendu de partir des compositions les plus riches en silicates. La composition préparée avec l'adjonction d'une quantité limitée de silice colloïdale permet d'ajuster le rapport molaire. La sélection de ces deux paramètres conduit soit à une composition ne nécessitant aucune élimination d'eau, soit à une élimination très réduite.

Si les solutions de silicates disponibles dans le commerce présentent les caractéristiques indiquées ci-dessus, ces solutions ne sont pas optimisées pour l'utilisation envisagée. Les applications les plus usuelles de ces solutions, même si la concentration en silicate n'est pas indifférente, ne requièrent pas que la teneur en eau soit poussée vers le minimum possible. Le choix de maintenir des solutions parfaitement stables en toute circonstance conduit les producteurs à maintenir une teneur en eau qui garantit notamment contre tout risque de viscosité trop élevée, voire de gélification intempestive.

A titre indicatif les solutions de silicates commercialisées ont une viscosité de l'ordre de 700mPa.s à 25°C. A cette viscosité la composition, pour un rapport molaire de l'ordre de 4, a une teneur en eau de l'ordre de 60 à 70%.

Les inventeurs se sont donc efforcés de partir de solutions de silicates, notamment des silicates de potassium, contenant une teneur en eau réduite par rapport aux produits disponibles dans le commerce, et présentant cependant un rapport molaire suffisant pour réduire le plus possible l'addition nécessaire de silice colloïdale.

Partant de produits industriels tels que ceux indiqués ci-dessus les inventeurs ont ramenés les rapports molaires de ces solutions jusqu'à des niveaux permettant de réduire de façon très significative la teneur en eau. De façon avantageuse la teneur en eau des solutions de silicates est ramenée à moins de 45% et de préférence à moins de 40% et peut descendre à des valeurs inférieures à 35%. Il est possible de réduire encore cette teneur mais soit la viscosité devient trop importante, soit le rapport molaire de ces compositions devient très faible ce qui a pour conséquence dans la préparation ultérieure de nécessiter l'ajout d'une quantité très importante de silice colloïdale.

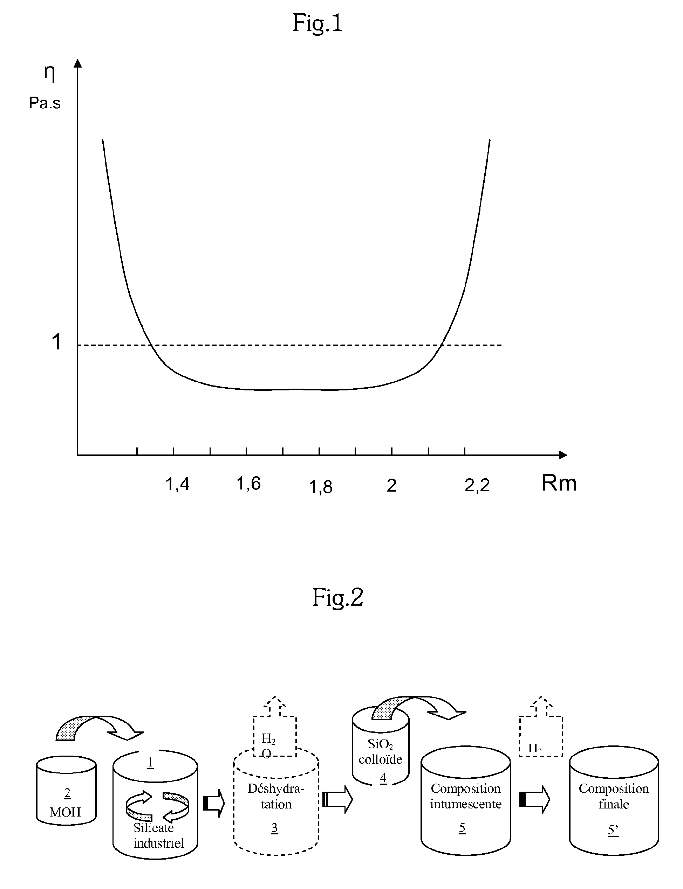

Dans les conditions adéquates de viscosité et de teneur en eau, indiquées ci-dessus, les silicates correspondants présentent des rapports molaires SiO₂/K₂O qui se situent dans le domaine de 1,3 à 2,2, et, plus particulièrement dans le domaine 1,4 à 2. Comme le montre le graphique de la figure 1, pour une même teneur en eau, dans le cas présent 30% en poids, la viscosité est au plus bas dans les domaines de rapport molaire indiqués. Cette viscosité croît de manière très rapide dès que l'on s'écarte de la plage de 1,3 à 2,4, soit en diminuant soit en augmentant le rapport molaire.

Selon l'invention la préparation des solutions de silicates à faible teneur en eau, partant des poly-silicates industriels du commerce présentant une teneur en eau de l'ordre de 60-70% en poids, consiste dans un premier temps à réduire le rapport molaire par adjonction de solution d'hydroxyde alcalin, notamment de potasse.

La potasse est disponible sous forme de solution concentrée. La solubilité de l'hydroxyde de potassium à la température ambiante est limitée. Elle ne dépasse pas ordinairement 50% en poids d'hydroxyde.

L'addition de solution d'hydroxyde de potassium jusqu'à diminution de la valeur du rapport molaire s'accompagne d'une réduction de la teneur globale en eau en raison de ce que l'hydroxyde présente lui-même une teneur en eau plus faible que la solution de silicate de base.

Le silicate ainsi ramené à un rapport molaire beaucoup moins élevé présente encore une teneur en eau trop importante. Elle est de l'ordre de 55 à 60%. La quantité d'eau est alors réduite, notamment par dessiccation sous vide directement sur le silicate pour l'amener jusqu'aux valeurs indiquées précédemment, valeurs auxquelles correspondent des viscosités acceptables.

Il est possible aussi en principe de substituer, au moins en partie, l'hydroxyde de potassium sous forme de pastilles à la solution concentrée. On réduit d'autant la quantité d'eau du mélange, et donc l'opération de dessiccation. Néanmoins l'utilisation de ces pastilles présente des difficultés d'homogénéisation de la composition qui limitent cette possibilité.

Partant des compositions de silicate à faible teneur en eau (moins de 45% et de préférence moins de 40%, ou même moins de 35%) et à faible rapport molaire (de 1,3 à 2,2, et de préférence de 1,4 à 2), la composition est amenée au rapport molaire souhaité par addition de suspension de silice colloïdale.

Pour minimiser l'introduction d'eau on utilise des suspensions aussi concentrées que possible. En pratique la teneur en silice de ces solutions ne dépasse pas le plus souvent 50% en poids. Cette addition de silice colloïdale se traduit dans tous les cas par un accroissement de la teneur en eau de la composition finale en proportion de l'accroissement du caractère réfractaire que l'on souhaite obtenir. Plus celui-ci est important, et donc plus le rapport molaire est élevé, plus la quantité de silice colloïdale introduite est importante, et par suite plus la teneur en eau s'élève.

Cet accroissement de la teneur en eau ne modifie pas sensiblement les conditions ultérieures de traitement, et en particulier le fait que la composition appliquée ne nécessite pas de séchage, dans la mesure où cette introduction d'eau avec la silice colloïdale, en s'accompagnant d'un accroissement du rapport molaire, maintient à peu près les conditions de viscosité et celle qui en découlent pour la formation consécutive des gels.

Si néanmoins la teneur en eau du mélange s'avère trop élevée, il est avantageux de procéder à une dessiccation de la composition avant son application. Lorsque la dessiccation est nécessaire, elle est faite avantageusement en soumettant le produit à une évaporation sous pression partielle. La déshydratation dans ce cas présente l'avantage de conduire simultanément au dégazage du produit. On prévient ainsi le risque d'entraînement de bulles dans la couche préparée à partir de cette composition.

La dessiccation peut être faite à température ambiante. Une température légèrement plus haute peut accélérer l'élimination de l'eau. Toutefois ce réchauffement de la composition doit rester très limité pour éviter tout risque de prise en masse anticipée. En pratique la température ne dépasse pas 60°C.

Indépendamment de ces modes de production visant à utiliser au mieux les solutions de silicates industrielles, les inventeurs ont aussi mis en évidence, de façon surprenante, notamment pour ce qui concerne les qualités optiques des vitrages anti-feu incorporant des couches obtenues à partir des compositions selon l'invention, que ces qualités pouvaient être sensibles au mode de production des solutions de silicates utilisés, à compositions identiques par ailleurs.

De manière simplifiée les solutions de silicates industriels sont produites de deux façons. Selon un premier procédé, le silicate est obtenu par fusion de carbonate alcalin et de silice. Le produit vitreux obtenu après pulvérisation est mis en solution. Selon un autre mode le sable est dissout dans une solution d'hydroxyde concentrée et chaude.

Bien que les deux techniques de préparation puissent conduire à une même composition, leur utilisation dans les vitrages anti-feu selon l'invention montre que ces compositions ne présentent pas entièrement les mêmes propriétés. Des différences sont en effet apparues aux inventeurs comparant systématiquement des vitrages qui ne se distinguent que par le mode d'obtention de la solution du silicate de base qui entre dans la composition de la couche intumescente. Il apparaît, sans que cette différence ait fait l'objet d'une étude de ce qui en est la cause, que les compositions intumescentes dans lesquelles les solutions de silicates sont préparées à partir de sable et d'hydroxyde concentré et chaud, offrent une meilleure résistance au vieillissement. Exposés à la chaleur pendant plusieurs dizaines de jours leur transparence est bien conservée. Pour les solutions silicates ayant été préparées par fusion à partir de carbonate, dans les mêmes conditions de vieillissement on constate une tendance à développer un certain trouble de la couche intumescente ("haze"). Il est donc bien préférable selon l'invention d'utiliser des solutions de silicates obtenues par la voie de dissolution de sable dans l'hydroxyde.

Dans la mesure où selon l'invention on utilise, au moins pour une part significative des solutions de silicates industrielles comme source de SiO₂, la quantité de silice colloïdale utilisée peut être maintenue au minimum. Bien évidemment, il est toujours possible de substituer une partie de la source de SiO₂ constituée par la solution de silicate industrielle, par une quantité correspondante de SiO₂ provenant de silice colloïdale. Mais dans ce cas l'économie recherchée est d'autant moindre.

Toujours selon l'invention, et comme spécifié dans la demande européenne déposée n° 07 108 971.8, il est avantageux de choisir pour silice colloïdale de la silice dont le diamètre moyen des particules se situe de préférence entre 50 et 150nm, et de préférence entre 60 et 120nm.

Les dimensions des particules d'une même suspension de silice sont ordinairement bien homogènes. Une part qui n'est pas inférieure à 80% en poids des particules se situe dans l'intervalle de ±10% du diamètre moyen.

A l'expérience l'utilisation de particules de dimension pas trop petite semble accroître le temps ("pot-life") pendant lequel la composition est suffisamment fluide pour être coulée sans difficulté. Les compositions selon l'invention, et particulièrement celles dont la teneur en eau est la plus faible compte tenu de leur rapport molaire, évoluent naturellement vers un gel une fois tous les constituants rassemblés, autrement dit après avoir effectué la totalité de l'addition de silice colloïdale finale. Pour conserver la composition sur de très longues périodes, on retardera l'addition d'une partie au moins de la silice colloïdale. Cette addition finale ne sera effectuée que peu de temps avant l'utilisation de la composition. Par ailleurs, ces compositions lorsque toute la silice colloïdale nécessaire a été introduite, peuvent être conservées pendant plusieurs heures, voire plusieurs jours, selon leur composition. Cette durée de conservation peut être prolongée en refroidissant la composition par exemple à 4°C.

La couche intumescente est principalement composée de poly-silicates de potassium et d'eau. Une partie du potassium peut être remplacée par du sodium et/ou du lithium. L'addition d'alcalins autres que le potassium doit rester dans des proportions limitées, de telle sorte que la température de ramollissement des couches obtenues ne soit pas trop abaissée.

Les silicates de potassium sont préférés. Ils représentent avantageusement au moins 60% en poids de l'ensemble des silicates, et de préférence au moins 80%. De façon particulièrement préférée, la totalité des silicates utilisés, aux impuretés inévitables près, autrement dit plus de 95% en poids, est constituée de silicate de potassium.

En dehors des silicates et de l'eau, divers additifs peuvent être introduits dans la composition, notamment un ou plusieurs polyols, et en particulier de l'éthylène glycol ou de la glycérine.

Dans les produits intumescents séchés de l'art antérieur, l'introduction de ces polyols est destinée notamment à compenser le manque de plasticité des produits dont la teneur en eau est très faible (de 20 à 25%). La teneur en polyols peut alors s'élever jusqu'à 18-20% en poids dans la couche formée. Dans les couches intumescentes préparées selon l'invention, lorsque des polyols sont présents, leur teneur reste beaucoup plus faible. Elle n'est avantageusement pas supérieure à 10% en poids de la composition, et de préférence pas supérieure à 8%.

Des teneurs préférées en glycols, notamment en éthylène-glycol ou glycérine, sont comprises entre 2 et 6% en poids de la couche finale.

Traditionnellement les compositions intumescentes comportent encore d'autres additifs en faibles proportions. Il s'agit de produits azotés (urée, amines...) ou encore d'agents tensio-actifs.

Avantageusement les compositions contiennent de l'hydroxyde de tétra-méthyl ammonium (TMAH) à une teneur qui n'est pas supérieure à 2% en poids.

Un but de l'invention, comme indiqué précédemment, est notamment de proposer une composition intumescente qui ne nécessite aucun séchage pour parvenir au durcissement. Cette particularité, en dehors du gain qu'elle apporte dans la conduite de la production des vitrages, permet aussi la constitution de couches intumescentes dont l'épaisseur n'est pas limitée. Précédemment cette épaisseur tenait compte de la longueur du temps de séchage. En pratique ce temps croissant comme le carré de l'épaisseur, pour rester dans des limites acceptables industriellement, l'épaisseur des couches séchées ne dépassait pas ordinairement 2mm. L'utilisation de couches durcissant sans séchage permet de produire des couches beaucoup plus épaisses.

De façon pratique, pour certains vitrages il peut être utile de former des couches selon l'invention d'une épaisseur allant jusqu'à 8mm, voire même 10mm ou plus. Le plus fréquemment cependant les couches utilisées ont une épaisseur de 2 à 6mm.

L'utilisation de couches épaisses peut conduire à des produits sensiblement différents de ceux habituellement disponibles. Par exemple les qualités de tenue au feu conduisent dans les techniques traditionnelles à accroître le nombre de couches intumescentes et simultanément celui des feuilles de verre qui les supportent. Cette façon de faire peut être remplacée par l'utilisation de couches intumescentes plus épaisses et un nombre de feuille de verre moindre. Autrement dit, il est possible par ce biais de réduire l'épaisseur, le poids et le coût du vitrage pour une même qualité finale.

L'invention est présentée de façon illustrée schématiquement aux figures annexées dans lesquelles:
- la figure 1 est un graphique présentant la relation entre la viscosité et le rapport molaire d'une solution de silicates dédiée, pour une composition présentant une teneur en eau d'environ 33% en poids.
- la figure 2 est un diagramme d'un mode de préparation d'une composition de silicate alcalin hydraté selon l'invention;
- la figure 3 est un diagramme d'un mode de production d'un vitrage anti-feu selon l'invention ;
- la figure 4 est un diagramme illustrant un autre mode de production d'un vitrage selon l'invention.

Le graphique de la figure 1, comme indiqué précédemment illustre le comportement rhéologique d'une solution de silicate dédiée. Pour une même teneur en eau d'environ 33% en poids, en fonction du rapport molaire SiO_{2/}M₂O, la viscosité (η) de cette composition décroît d'abord de façon significative jusqu'à un rapport molaire d'environ 1,3. Le rapport croissant encore, la viscosité reste sensiblement la même le long d'un palier qui s'étend jusqu'à atteindre un rapport de l'ordre de 2,2. Les solutions de silicates dédiées utilisées selon l'invention sont avantageusement choisies dans la zone correspondant à une viscosité aussi faible que possible pour le rapport molaire le plus élevé.

La figure 2 illustre de façon synoptique les différentes étapes de préparation des silicates alcalins selon l'invention. La composition est constituée à partir d'une solution de silicates industrielle (1), choisie comme indiqué avec une teneur en eau qui bien qu'aussi faible que possible se situe aux environs de 60-65%. Le rapport molaire initial est de l'ordre de 3 à 4.

La préparation passe d'abord par l'accroissement de la teneur en matière sèche sans risquer la gélification. On ajoute à cet effet une solution concentrée d'hydroxyde alcalin et/ou de pastilles d'hydroxyde (2). Le mélange est homogénéisé. Sa teneur en eau pouvant être un peu trop élevée, on procède le cas échéant à une dessiccation qui s'effectue directement sur la composition (3). La dessiccation est conduite par exemple par évaporation sous vide partiel. Cette dessiccation éventuelle offre simultanément l'avantage de dégazer la composition obtenue, et permet donc d'éliminer les bulles présentes.

La composition éventuellement en partie déshydratée et complétée le cas échéant d'additifs notamment de glycols, de tensio-actifs etc, est complétée par l'addition d'une suspension de silice colloïdale (4). L'addition de silice est de préférence progressive et sous agitation constante pour éviter une gélification prématurée. Le cas échéant une partie de la silice nécessaire pour la production de la composition finale (5) n'est introduite que dans les instants précédant l'utilisation.

A ce stade la composition (5) subit habituellement une étape de dégazage et/ou évaporation sous pression réduite indiquée en pointillée, conduisant à une composition dont la teneur en eau est ajustée (5').

La composition intumescente (5 ou 5') est globalement stable à la température ordinaire. Elle l'est encore davantage conservée à environ 4°C.

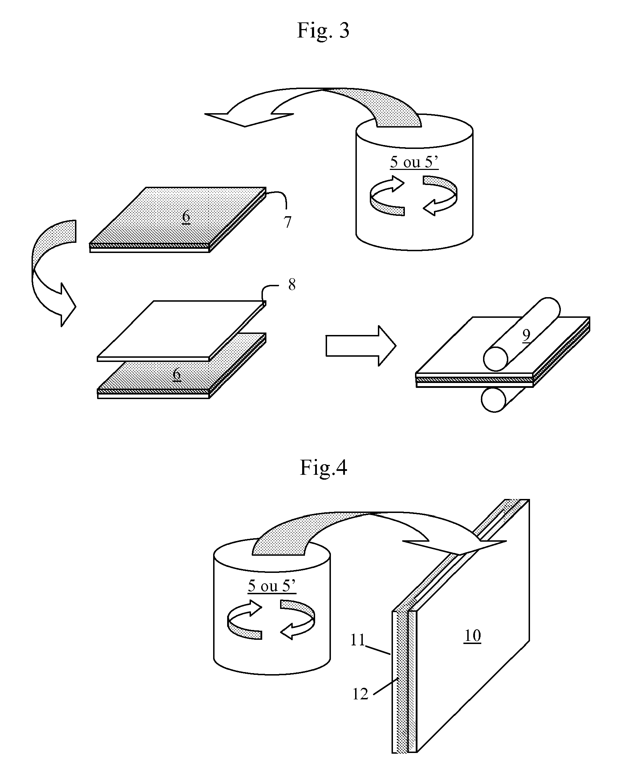

La figure 3 illustre une manière d'utilisation des compositions intumescentes préparées dans la production d'un vitrage anti-feu.

La composition liquide (5, 5') est appliquée sur une feuille de verre 7 maintenue horizontale. La couche de composition liquide 6 durcit sans séchage sur cette feuille. Une deuxième feuille de verre 8 vient recouvrir la couche 6 pendant ou après durcissement.

La prise en masse de la composition intumescente intervient spontanément. Elle peut être accélérée par chauffage à température modérée. Ce chauffage est effectué de préférence à moins de 80°C.

Pour améliorer l'adhérence de la couche intumescente à la feuille de verre il est aussi possible d'appliquer sur celle-ci, ou encore d'introduire dans la composition, des composés favorisant cette adhérence. Il s'agit par exemple de silanes comportant éventuellement des groupes fonctionnels tels les amino-silanes.

L'opération de superposition des feuilles de verre et des couches intumescentes comprend éventuellement plusieurs couches intumescentes et autant de feuilles de verre supplémentaires. Ces couches intumescentes et feuilles de verre sont identiques ou différentes selon les applications envisagées.

L'assemblage final est conduit avantageusement par calandrage entre des rouleaux comme indiqué en 9. On peut également procéder à un passage à l'autoclave. La température de l'autoclave est assortie à la pression mise en oeuvre. A titre indicatif sous 13 atmosphères relatives, la température ne dépasse pas 130°C.

L'élément de base des vitrages anti-feu transparents est constitué systématiquement d'une couche intumescente, prise entre deux feuilles de verre. Les feuilles de verre sont comme représentées monolithiques ou le cas échéant constituées d'un ensemble feuilleté incluant une feuille intercalaire par exemple de type butyral de polyvinyl (PVB), d'éthylène vinyl-acétate (EVA) de polyuréthane (PU), de polyéthylène (PE) ou analogue.

Les vitrages anti-feu commercialisés sont développés à partir de l'élément de base, notamment en associant dans un même ensemble plusieurs couches intumescentes et plusieurs feuilles de verre, identiques ou différentes selon l'usage envisagé.

Dans la pratique, la multiplication des couches a pour but notamment d'accroître les caractéristiques de résistance au feu et de résistance au choc mou, les multiples couches intumescentes additionnant leurs effets. De tels assemblages sont avantageusement remplacés par d'autres dans lesquels les couches sont plus épaisses, le mode de formation sans séchage se prêtant bien pour les raisons indiquées plus haut à la formation de couches épaisses.

Les assemblages peuvent aussi se faire à partir de feuilles de verre revêtues chacune d'une couche intumescente, deux feuilles étant assemblées en accolant leurs couches intumescentes.

Dans la manière de production de vitrages anti-feu présentée à la figure 4, la composition intumescente (5, 5') est versée dans l'espace délimité par deux feuilles de verre 10 et 11 réunies sur leurs bords par un cordon de matériau 12 qui rend cet espace étanche. Comme précédemment la composition durcit sans séchage entre les feuilles de verre. Ce mode de production est utilisé principalement pour constituer des couches intumescentes de grande épaisseur (plus de 3mm).

L"application de la composition peut aussi être effectuée sur un support qui défile en continu, la couche étant alors récupérée sous forme d'un ruban. La solution de silicate préparée comme précédemment est versée sur le support convoyeur horizontal, constitué de façon préférée d'un matériau polymère non adhérant à la feuille de silicate préparée. Le convoyeur ainsi revêtu passe avantageusement dans un four accélérant le durcissement. Le ruban intumescent durci est séparé du tapis convoyeur et éventuellement enroulé sur lui même. Pour éviter que les spires n'adhèrent les unes aux autres le ruban peut être "interfolié" avec une feuille intercalaire pendant le stockage. La feuille intumescente ainsi préparée peut être assemblée ultérieurement avec des feuilles de verre comme précédemment.

A titre d'exemple, on utilise une solution de silicate industrielle préparée par dissolution de sable dans une solution concentrée et chaude d'hydroxyde d potassium. Cette solution présente une teneur en eau de 60% un rapport SiO₂/K₂O de 3,5, et une viscosité d'environ 1Pa.s.

Par addition d'une solution concentrée d'hydroxyde de potassium, le rapport molaire est ramené à 1,46 et la teneur en eau est ultérieurement ajustée par dessiccation sous vide jusqu'à 40% en poids. La viscosité de la composition est alors de 0,2Pa.s.

A la composition obtenue, on ajoute 2% en poids de TMAH en solution aqueuse à 25% en poids, et 4% en poids d'éthylène glycol.

Pour compléter la composition, on ajoute une suspension de particules de silice colloïdale à 50% de silice. Les particules ont un diamètre moyen de 63nm. On procède ensuite à une étape de déshydratation.

Selon la quantité de silice colloïdale ajoutée, et selon la quantité d'eau évaporée, le traitement conduit à des compositions présentant notamment les rapports molaires et teneurs en eau en poids de :

| Rₘ | H₂O % | H₂O % | H₂O % | H₂O % |
|---|---|---|---|---|
| 3 ,8 | 48 | 44 | | 38 |
| 4,6 | 48 | 44 | 40 | 38 |
| 5,3 | | 44 | | |

Ces compositions sont appliquées sur une feuille de verre de 3mm d'épaisseur, en une couche de 2mm. Après durcissement une deuxième feuille de verre de 3mm recouvre la couche intumescente. L'ensemble est calandré.

Les feuilles préparées sont soumises à un vieillissement accéléré pour vérifier leur comportement. Elles sont placées dans une étuve portée à 80°C.

Après 7 jours aucun des échantillons ne montre un trouble ou l'apparition de bulles. Il en est de même après 14 jours.

Les mêmes compositions sont versées dans l'espace ménagé entre deux feuilles de verre à la périphérie desquelles un cordon étanche est disposé. La composition durcit dans cet espace. Les vitrages préparés sont soumis à un vieillissement accéléré dans des conditions analogues aux précédentes. Après 7 jours puis 14 jours, aucun échantillon ne montre de bulles ou un trouble.

## Revendications

1. Vitrage anti-feu transparent comprenant au moins une couche de matériau intumescent compris entre des feuilles de verre, dans lequel la couche intumescente est une couche de poly-silicate alcalin hydraté dans la préparation duquel la silice présente provient pour au moins 20% d'une solution de silicate industrielle, le surplus provenant d'une suspension de silice colloïdale, la préparation de la composition comprenant systématiquement le passage de la solution de silicate industrielle à une solution de silicate dédiée par un ajustement de la teneur en eau à une valeur inférieure à 45% et de préférence inférieure à 40%.

2. Vitrage anti-feu selon la revendication 1, dans lequel la silice présente provient pour au moins 30% d'une solution de silicate industrielle.

3. Vitrage selon la revendication 1 ou la revendication 2 dans lequel la préparation de la solution de silicate dédiée comprend un accroissement de la proportion de matière sèche par addition d'hydroxyde alcalin sous forme de solution concentrée et/ou sous forme de pastilles suivie le cas échéant par une opération de dessiccation partielle.

4. Vitrage selon la revendication précédente dans lequel la solution de silicate dédiée enrichie en matière sèche présente un rapport molaire SiO₂ /M₂O compris entre 1,3 et 2,2, et de préférence entre 1,4 et 2.

5. Vitrage selon l'une des revendications précédentes dans laquelle la solution de silicate industrielle utilisée provient d'une dissolution de silice dans une solution concentrée chaude d'hydroxyde alcalin.

6. Vitrage selon l'une des revendications précédentes dans lequel la silice colloïdale qui complète la teneur en silice de la composition, présente des particules dont les dimensions sont comprises entre 50 et 150nm et de préférence entre 60 et 130nm.

7. Vitrage selon l'une des revendications précédentes dans la couche intumescente duquel, le rapport molaire de silice aux alcalins est compris entre 3 et 8, et de préférence entre 3,5 et 6.

8. Vitrage selon l'une des revendications précédentes dans lequel, dans la couche intumescente, le composant alcalin est le potassium, éventuellement en partie remplacé par le sodium et/ou le lithium.

9. Vitrage selon la revendication 8 dans lequel le composant alcalin est constitué pour au moins 60% en poids de silicate de potassium et de préférence d'au moins 80%.

10. Vitrage selon l'une des revendications précédentes, dans lequel, la couche intumescente contient aussi un ou plusieurs polyols en proportion inférieure à 10% en poids, et de préférence inférieure à 8%.

11. Vitrage selon l'une des revendications précédentes dans lequel la préparation de la composition intumescente comporte une étape de dégazage et/ou déshydratation sous vide après que la plus grande partie au moins de la suspension de silice colloïdale ait été ajoutée.

12. Vitrage selon l'une des revendications précédentes dans lequel la couche intumescente présente une épaisseur supérieure à 2mm et de préférence de 2 à 8mm.

13. Vitrage selon l'une des revendications précédentes dans lequel l'adhérence de la couche intumescente aux feuilles de verre avec lesquelles elle est en contact, est favorisée par application d'au moins un promoteur d'adhérence sur ces feuilles, ou par incorporation dans la composition intumescente.

14. Vitrage selon la revendication 13 dans lequel le ou les promoteurs d'adhérence sont des silanes ou des silanes à groupes fonctionnels du type amino-silanes.

15. Procédé de préparation de vitrages anti-feu selon l'une des revendications précédentes comprenant au moins une couche intumescente formée pour partie à partir d'une solution de silicate alcalin industriel à laquelle est ajoutée une solution d'hydroxyde alcalin concentrée et/ou des pastilles d'hydroxyde alcalin, addition suivie le cas échéant d'une dessiccation partielle, une suspension de silice colloïdale étant ajoutée au silicate préalablement préparé, la composition étant éventuellement soumise à une dégazage/ déshydratation après l'incorporation d'au moins la plus grande partie de la suspension de silice colloïdale.

16. Procédé selon la revendication 15 dans lequel la composition dans laquelle tous les composants ont été réunis, est appliquée sur une feuille de verre horizontale, en quantité correspondant à l'épaisseur souhaitée, la composition étant laissée à prendre en masse, une deuxième feuille de verre étant appliquée sur la couche durcie, l'ensemble étant assemblé par calandrage et/ou passage à l'étuve.

17. Procédé selon la revendication 16 dans lequel plusieurs feuilles de verre, comportant chacune une couche intumescente, sont superposées, et une feuille de verre supplémentaire étant appliquée sur la couche intumescente non précédemment recouverte dans la superposition, l'assemblage étant effectué par calandrage et/ou passage à l'étuve.

18. Procédé selon la revendication 16 dans lequel deux feuille de verre comportant chacune une couche intumescente, les deux couches intumescentes étant en contact l'une de l'autre, sont assemblées par calandrage et/ou étuvage.

19. Procédé selon la revendication 15 dans lequel la composition dans laquelle tous les composants ont été réunis, est versée dans l'espace ménagé entre deux feuilles de verre à la périphérie desquelles est disposé un cordon étanche, la composition durcissant dans cet espace.

20. Procédé selon l'une des revendications 15 à 19 dans lequel la prise en masse de la solution intumescente est accélérée par chauffage à une température n'excédant pas 80°C.

21. Procédé selon l'une des revendications 15 à 19, dans lequel la prise en masse de la solution est obtenue par passage à l'autoclave à une température ne dépassant pas 130°C sous une pression au plus de 13 atmosphères.

22. Procédé selon la revendication 15 dans lequel la couche intumescente est durcie sur un support horizontal, est ensuite détachée de ce support pour être assemblée avec au moins deux feuilles de verre.

23. Vitrage selon l'une des revendications 1 à 14, comprenant au moins une feuille thermoplastique associant deux feuilles de verre.
